# EUROPEAN PATENT APPLICATION

(11) **EP 2 048 854 A1**
(43) Date of publication of application: **15.04.2009**
(21) Application number: 08105544.4
(22) Date of filing: 10.10.2008
(51) Int. Cl.: H04L 29/08, G01W 1/00

(54) **System and method for instantaneous information reporting on portable devices**

(30) Priority: 14.10.2007 US 979865 P
(71) Applicant: IDT Technology Limited, Kowloon, Hong Kong SAR (CN)
(72) Inventor: Chan, Raymond, Hong Kong (CN); Leong, Mun Hoong, Repulse Bay, Hong Kong (CN)
(74) Representative: Schweiger, Martin

(57) **Abstract**

A system and method for instantaneous information reporting on portable devices including a computer server (20), a wireless device (26) attached to a personal computer (22), a communication network and one or more display monitors (28). The wireless device (26) forwards the information retrieved from the computer server (20) via the communication network and send such information to the portable display monitors (28) via wireless communication. Moreover, a method for reporting environmental information to a personal computer (22) of a prescribed user from a computer server (20) via a communication network is disclosed.

## Description

### FIELD OF INVENTION

The present invention relates to systems and methods for delivering text information from a plurality of information sources to at least one information display unit by wireless communication.

### BACKGROUND OF INVENTION

There is a genuine need to provide up-to-date, concise information to users. For example, when a person wakes up in the morning and is preparing to go to work, he or she would like to know the outside temperature and the weather forecast in order to dress accordingly. The latest traffic information would also help commuters avoid congested areas. In addition, many would like to know the how the financial market performed the day before, as well as any major news events.

One option is for users to retrieve this information from the television or radio. These methods, however, are relatively time consuming. Further, some information sources (such as TV and radio) may not provide the exact information that the user is seeking. Users also are subject to long and unwanted advertising. Alternatively, users can turn on a computer, navigate to various websites, and retrieve the information. This process can also be time consuming, and users may have to navigate to multiple pages and sift through large amounts of information in order to retrieve the desired information.

### SUMMARY OF INVENTION

A need therefore exists for a low cost reporting method and system that can collect and distribute up-to-date information relevant to the user in a concise manner.

Accordingly, in one embodiment, an environmental information reporting system includes a computer server that collects the environmental information from a plurality of sources, processes the environmental information and sends it to prescribed users via a communication network. Exemplary embodiments also include a wireless device that is attached to a personal computer as peripheral. The wireless device is receives the environmental information from the personal computer, which in turn obtains the environmental information from the computer server via the communications network. The wireless device further includes a radio frequency transmitter to broadcast the environmental information, and at least one display panel containing a wireless receiver, a microprocessor, and a display monitor. The wireless receiver receives the environmental information from the wireless device and displays the environmental information onto the display monitor. When the prescribed user executes a software program from the personal computer to select the environmental information that he is interested in, the software program requests the computer server to download the selected environmental information to the wireless device via the personal computer through the communication network. The software program further activates the wireless device to broadcast the selected environmental information to the at least one display panel. This broadcast causes the selected environmental information to be displayed on the display monitor for the prescribed user to view.

In another exemplary embodiment, the environmental information reporting system further includes at least one sensor that measures local environmental information. The wireless device and the display panel further include a wireless receiver. The sensor is coupled to the display panel. Local environmental information is wirelessly sent to the wireless device, which in turn forwards the information to the computer server through the personal computer.

In yet another exemplary embodiment, the environmental information in the aforementioned system further comprises financial information, stock market indices, currency exchange rates, headline news, and any combination thereof.

In one embodiment, the environmental information reporting system provides a fully automatic and highly personalized information channel for individuals. By simply selecting the information channels and the update frequencies thereof, the prescribed user can receive the most updated information that he or she desires without any manual operation, as if the information is "pushed" to him. Moreover, the information can be shown on a plurality of information display units in virtually any place that the user prefers. Thus, exemplary embodiments provide great convenience for the user as he is no longer limited to a fixed place to view the information. The information presented to the user is also concise and up-to-date, without any irrelevant or advertisement information presented at the same time.

Another exemplary embodiment includes connecting sensors to the personal computer in a local environment and allows sharing of information within a network. Environmental information, for example, can be recorded and uploaded by one computer to the network such that every other personal computer joining the network can obtain the information.

### BRIEF DESCRIPTION OF FIGURES

Fig. 1 is a block diagram of the environmental information reporting system in accordance with one exemplary embodiment.

Fig. 2 is the block diagram of the environmental information reporting system in accordance with one exemplary embodiment.

Fig. 3 is the block diagram of the environmental information reporting system in accordance with one exemplary embodiment.

Fig. 4 is the table showing the rearrangement algorithm to the raw information in accordance with one exemplary embodiment.

### DETAILED DESCRIPTION OF THE PREFERRED EMBODIMENTS

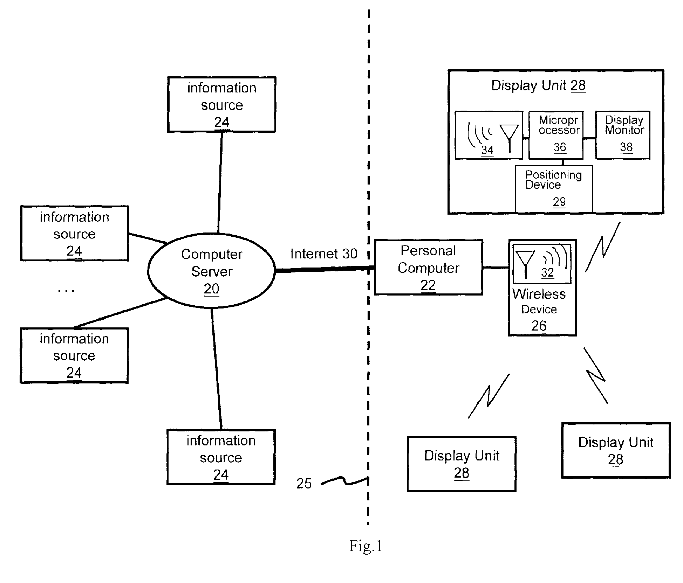

Referring to Fig. 1, a first embodiment of the information reporting system comprises a computer server **20**, one or more information sources **24**, and one or more information dispensing subsystems **25** (one being shown by way of example). The information dispensing subsystem **25** further comprises a personal computer **22**, a wireless device **26**, and at least one information display unit **28**. The information sources **24** are all connected to the computer server **20** over a data communication network infrastructure, and the personal computer **22** in the information dispensing subsystem **25** is also connected to the server **20** via the data communication network. The data communication network infrastructure can be a local area network (LAN), a wide area network (WAN) or a global network such as the Internet **30**. Both the information sources **24** and the personal computers **22** can share the same data communication network, or they can use separate networks. The wireless device **26** further comprises a radio frequency (RF) transmitter **32** and is directly or indirectly connected to the personal computer **22** as a peripheral. The display unit **28** comprises a radio frequency receiver **34** that is wirelessly coupled to the wireless device **26**, a microprocessor **36** and a display monitor **38**, and optionally a positioning device **29**

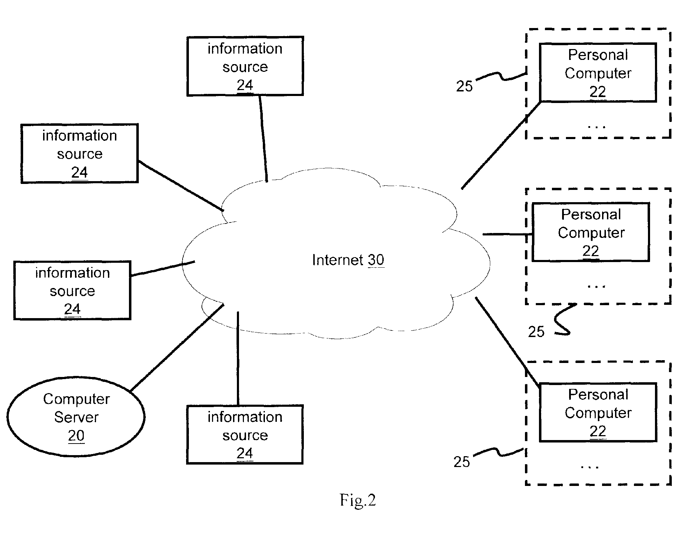

In one exemplary embodiment, the information sources **24**, the computer server **20**, and the personal computers **22** of the information dispense subsystem **25** are all connected the Internet **30**, as shown in Fig. 2. Although the different components in the diagram are physically spread geographically apart, they are logically connected together via the Internet data communication network.

In one embodiment, the computer server, **20** which is also referred to as an information service provider, collects environmental and other types of information from a plurality of information sources **24**. As an example, the information obtained from information source **24** includes weather information, time and date of a particular locale, traffic information, financial information, sports or headline news, and other information selected to be relevant by a user. Such information is usually in diversified data formats specified by the source concerned. For example, the weather information to be collected includes but is not limited to temperature, humidity, atmospheric pressure, wind speed, wind direction, air quality, typhoon signal and local-specific multi-day rain or shine forecasts. Multimedia information such as images and videos are also available for visualized weather information such as radar image, satellite images and typhoon routes. Other derived information from the raw weather data, such as various weather warnings including but not limited to typhoon warning, sea warning, low temperature warning, etc, can also be sources of the information.

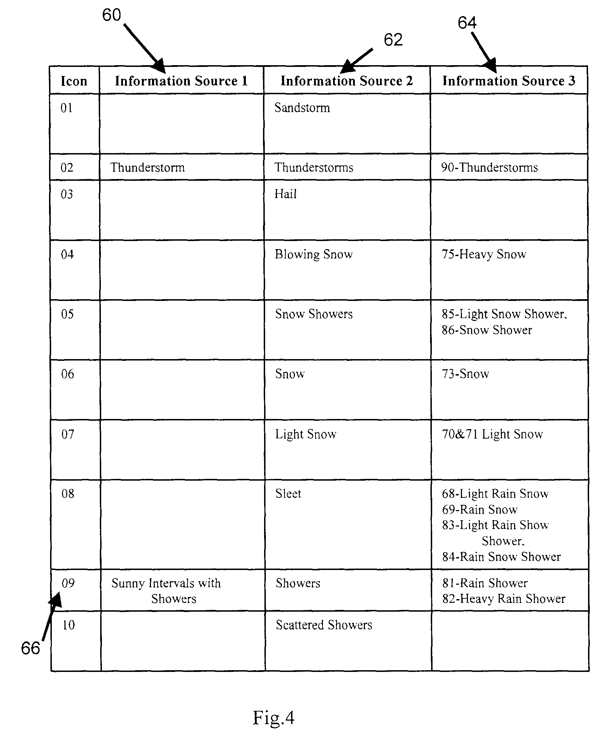

After collecting the information, the computer server **20** filters the information and then formats it into a pre-defined data format. This formatted data is then forwarded to the wireless device **26** through the personal computer **22**. By way of example, the data format after processing is in XML (Extensible Markup Language) format. In one exemplary embodiment, the rearrangement step is performed by processing a lookup table calculation. As shown in Fig. 4, the raw information collected from individual information sources are aligned in horizontal direction with respect to different sources, and in vertical direction with respect to the types of information. All the information of the same type from each information source, if available, is mapped to one unique icon. For example, "Sunny Intervals with Showers" from the first information source **60**, "showers" from the second information source **62**, and "81-Rain Shower", "82-Heavy Rain Shower" from the third information source **64** are all mapped to Icon09 **66.** The complicated and heterogeneous raw information are thus simplified and unified into one easily recognizable icon.

A software program provided by the service provider is installed in the personal computer **22** to allow a subscribed user to access the server **20**, select the information that the user is interested in, and download such information to the personal computer **22**. Specifically, when a subscribed user uses this software to login to the server, and after the server authenticates and verifies the user, the server provides a list of information to the software for the subscribed user to select. For example, the software can offer the option of downloading specific information such as weather forecast, instant stock quote, or latest headline news. The frequency of refreshing the information as well as the level of information details can also be set according to the user's preference. Such options are preferably correlated with the subscription plan that the user has signed up in the sense that when the user chooses a premium plan, the user can access more information sources and have more options in each choice.

After the subscribed user has set the schedule of the information on the personal computer **22**, the software will perform periodic downloading of the specified content from the computer server **20** through the Internet **30** to the personal computer **22**. The whole process is fully automatic unless the user wants to change the existing schedule.

In the next step, the personal computer **22** will forward the received information to the wireless device **26**, which is directly or indirectly attached to the personal computer **22** as a peripheral device. To receive the information from the computer server **20** and forward it to the wireless device **26**, the computer **22** is switched on. Alternatively, the computer can be put to sleep mode, but wakes up periodically to request the selected information from the server and forward it to the wireless device **26.**

In one embodiment, the wireless device **26** is equipped with a radio frequency (RF) transmitter **32**. This can be a simple RF transmitter, or it can be any RF devices conforming to any wireless technology standard - such as the various cellular mobile phone standards, Wi-Fi, Bluetooth, Zigbee or Ultra Wide Band (UWB) standards, to name a few examples.

In one embodiment, the radio frequency transmitter **32** operates at 433MHz frequency. This particular frequency band belongs to the Industrial, Scientific and Medical (ISM) band in most countries in the world and is free to use such that there is no need to apply for a license. Further, the cost for a 433MHZ device is relatively low compared to devices in higher frequency bands. In one embodiment, the 433MHZ device can achieve a transmission range of about 100 meters. The radio frequency transmitter **32** also contains a modulation circuit to convert the incoming digital signal into analog signal for output. In one implementation, the modulation method used is Amplitude Shift Keying (ASK) modulation, and the data transmission rate in this case, using 433 MHz operating frequency, is approximately 1kbps. As such, there is no need to obtain a license or pay a royalty to any international standard bodies, such as the case if Bluetooth or Wi-Fi technology were adopted.

In another embodiment, the wireless device **26** is designed to interface with the personal computer **22** via a Universal Serial Bus (USB) port. Thus the radio frequency transmitter **32** is connected to the personal computer as a peripheral and has a form-factor of a USB dongle. The USB port provides a simple connection to the personal computer **26**, and also supports plug-and-play so that hardware/software configuration is reduced to a minimum. If necessary, the wireless device **26** can be connected to a USB extension cable which in turn connects to the personal computer **22**. The wireless device **26** can be placed in a position, which is more favorable for good radio signal transmission, so as to increase the covering range of the wireless device **26**.

The display unit **28**, on the other hand, receives the information broadcasted from the wireless device **26** and displays it on the display monitor **38** for the subscribed user to view. The display unit **28** is preferably in the form of a display panel which can stand on a desk or a flat surface, easily mount on the wall or hang on other furniture. The radio frequency receiver **34** in the display unit **28** is designed to work together with the radio frequency transmitter **32** where parameters such as the operation frequency and modulation/demodulation method of the two are the same. The microprocessor **36** installed in the information display unit **28** processes the received information and optimizes it for display on the display monitor **38**. The display monitor **38** can be made using, for example, light emitted diode (LED) or liquid crystal display (LCD) technologies, including, but not limited to Super Twist Nematic Liquid Crystal Display (STN-LCD), Thin Film Transistor Liquid Crystal Display (TFT-LCD) or Organic Light Emitting Diode (OLED), ..., etc technologies. Alternatively, other technologies such as projecting can also be adopted. For example, the display unit **28** could be equipped with a miniaturized LCD projector module to project the received information in the form of large, easy-to-read characters to a plane such as a wall or a ceiling in a room. Optionally, a storage device such as a Flash memory can be embedded in the information display unit **28** to store information that is to be kept for a long time. The information display unit **28** can also be set up to present selected information with other effects, such as sound, color, photo or video etc.

In an alternative embodiment, each display unit **28** has a user input device which can receive the user's input. For a particular display unit **28**, the user can select for example the display mode of the unit to be stationary, slide show, zooming, etc. Furthermore, with the aid of the microprocessor **36**, the display unit **28** is able to realize advanced display functions such as historical data view, comparison view, chart view, or others. The user can select the channel or the type of information that they want to view from the display unit. This is useful because in different places where the display units **28** are positioned, people prefer to receive different information as a result. For example, in a home environment, people want to read the news in their dining room when they are having breakfast. At the door of the house, people would like to see the weather forecast before they go outside. In the bedroom, people prefer entertainment information such as Top-ten bookselling, Album of the Week, etc. For these purposes, the user can choose to display different information on different display units **28** in different locations within the premise.

In another exemplary embodiment, the positioning device **29** in the display unit **28** is able to detect the location of the display unit **28** within an indoor environment. Such a positioning device **29**, or so-called Indoor Position System (IPS), can be implemented using High Sensitivity GPS receiver, indoor WLAN positioning device, or an ultrasound device. Embedding a positioning device **29** into the display unit **28** enables the device to have the capability of detecting its location, and hence switching the content being displayed on the display monitor **38** according to the location. For example, when the display unit **28** is located in the kitchen, a first series of information is displayed. When the display unit **28** is moved to another location (for example, a bathroom or bedroom), a second, different series of information is displayed. The user can program or select which specific information is displayed in which location.

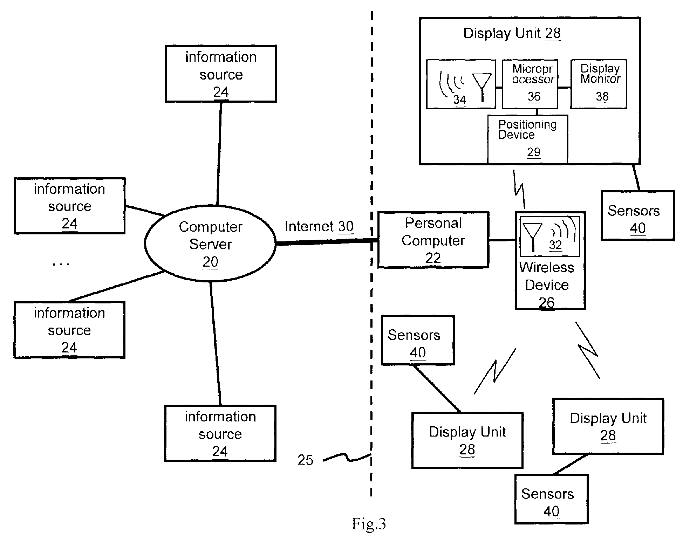

Turning to Fig. 3 now, in another embodiment, there are various environment sensors **40** coupled to the display unit **28**. Each sensor is able to perform some measurements of its surrounding environment, such as temperature, humidity, atmospheric pressure, wind speed, etc. The sensor sends its readings to the display unit **28**, on which the readings are displayed. As such, the most up-to-date information of the surrounding environment can be shown on the display unit **28** and read by the user. Traditional weather reports cannot provide such precise information as the environment sensors located in the observatory are usually far away from the user, which may lead to differences between the broadcasted weather information and the actual weather condition in the geographical area of interest. However, a residential environment sensor, like a weather station at the backyard of a house, can overcome such shortcomings.

In yet another exemplary embodiment, the display unit **28** display the environmental information of two or more cities at the same time. If the user wants to see the local environmental information, the relevant information will be obtained from the sensor **40**. In order to display the environmental information of cities other than the local city where the user is living, the user first make the selection of cities, either through a display unit **28** on directly on the personal computer **22**. The personal computer **22** then downloads the requested information from the computer server **20** via the Internet **30**, and forward to the display unit **28**. All the environmental information of different cities can be displayed on the display monitor **38** using various display, as those described above. Particularly, the environmental information displayed can be cycled on the display monitor **38**, or they can be displayed on the display monitor **38** at the same time simultaneously.

In another exemplary embodiment, the display unit **28** and the wireless device **26** both comprise a wireless transceiver instead of the one-way transmitter/receiver. The environment information as detected by the sensor **40** can be wirelessly transmitted back to the wireless device **26**, via the display unit **28**. Then, the personal computer **22**, after receiving such uploaded information, will further forward them to the computer server **20** through the Internet **30**. As a result, any information dispensing subsystem **25** within the network also serves as an information source **24** with the existence of the environment sensors. The contribution of many information dispensing subsystems **25** will help provide a more accurate and instant environment information for the whole area that the information reporting network covers.

The embodiments of the present invention are thus fully described. Although the description referred to particular embodiments, it will be clear to one skilled in the art that exemplary embodiments can be practiced with variation of these specific details. Hence this invention should not be construed as limited to the embodiments set forth herein.

Although the carrier frequency of 433MHz is mentioned in the previous discussion, one skilled in the art will appreciate that other frequency spectrum can be used. As mentioned before, the 433MHz frequency band is the ISM band which is free to use in most countries. However, different countries have different regulations governing the use of their frequency spectrum, and the teachings of this invention can equally apply to other frequency bands. Likewise, other modulation methods, such as Frequency Shift Key (FSK) or Phase Shift Key (PSK) can also be used in lieu of ASK as mentioned above. Additionally, other technologies that can transmit signal wirelessly, such as ultra-sound, infra-red or optical beam can also be used. The teachings of using radio frequency as a wireless information carrier are just one exemplary illustration of how exemplary embodiments can be realized. While environmental information such as time-of-date and weather information is mentioned previously, the information sources **24** can also include financial information such as stock quote, interest rates, and foreign exchange rates, etc. It can also include other types of information such as traffic conditions, headline news, etc. The computer server **20**, being operated by an information service provider, can incorporate diverse sources of information for its subscribers to choose. Exemplary embodiments are not limited to just environmental information.

Additionally, the time-and-date information can be gathered from the web-site that provides the international atomic clock synchronization. The atomic clock provides the most accurate timing information and can be used to synchronize the different clocks in the information dispensing subsystem **25**.

Moreover, the user would also like to know additional information pertaining to his or her own particular interests. As an exemplary illustration, the information dispensing subsystem **25** can also alert the user when a new email arrives, or a message is received from a particular contact. It can also inform the user of the appointments of that day and other tasks.

The personal computer **22** is described in the detailed discussion is an electronic data processing equipment that can connect to the computer server **20** via the data communication network on the one hand, and to the wireless device **26** on the other. Exemplary embodiments are not be limited to any specific type of computer that runs a particular operating system on a particular processor.

## Claims

1. An environmental information reporting system, comprising:
a computer server that collects environmental information from a plurality of sources and sends said environmental information to prescribed users via a communication network;
a wireless device that is attached to a personal computer as peripheral; said wireless device receiving said environmental information from said personal computer and including a radio frequency transmitter to broadcast said environmental information;
at least one display panel comprising a wireless receiver, a microprocessor, and a display monitor; said wireless receiver receiving said environmental information from said wireless device and displaying said environmental information onto said display monitor;
wherein when said prescribed user executes a software program from said personal computer to select said environmental information, said software program requests said computer server to download said selected environmental information to said wireless device via said personal computer through said communication network;
said software program further activating said wireless device to broadcast said selected environmental information to said at least one display panel, causing said selected environmental information to be displayed on said display monitor for said prescribed user to view.

2. The environmental information reporting system as in claim 1 wherein said user selects said environmental information from said personal computer.

3. The environmental information reporting system as in claim 1 wherein said computer server further assigns environmental information from said plurality of sources having same type to same icon and allows said prescribed user to select said icon.

4. The environmental information reporting system as in claim 1 wherein said wireless device and said display panel further comprise a wireless transmitter; said environmental information reporting system further comprising at least one sensor that measures local environmental information; said sensor couples to said display panel and sends said local environmental information wirelessly to said wireless device, which in turn forwards to said computer server through said personal computer.

5. The environmental information reporting system as in claim 1, wherein said environmental information comprises at least two of:
time and date information,
temperature information,
humidity,
atmospheric pressure,
wind speed and direction,
air quality, and typhoon signal., or
any weather warnings derived therefrom.

6. The environmental information reporting system as in claim 1, wherein said environmental information further comprising:
financial information;
stock market indices;
currency exchange rates;
headline news, and
any combination thereof.

7. The environmental information reporting system as in claim 1, wherein said wireless device is connected to said personal computer as a peripheral based on the universal serial bus (USB) standard.

8. The environmental information reporting system as in claim 7, wherein said wireless device has a form-factor of a USB dongle.

9. A method for reporting environmental information to a personal computer of a prescribed user from a computer server via a communication network, the method comprising:
collecting said environmental information from a plurality of sources;
processing said environmental information at said computer server;
allowing a prescribed user to select said environmental information;
sending said selected environmental information to a personal computer that is connected to said computer server via a communication network;
forwarding said selected environmental information to a wireless device that is attached to said personal computer as a peripheral device; said wireless device further broadcasting said selected environmental information through a radio frequency transmitter in said wireless device; and
displaying said selected environmental information onto a display panel; said display panel comprising a wireless receiver that receives said selected environmental information from said wireless device, a microprocessor that processes said environmental information, and a display monitor that presents said selected environmental information to said prescribed user.

10. A method according to claim 9 wherein said processing step further comprising:
identifying environmental information from said plurality of sources having same type to same category; and
assigning a unique icon to each said category;
wherein said unique icon is selectable by said prescribed user.
